# FASCICULE DE BREVET EUROPEEN

(11) **EP 0 737 036 B1**
(45) Date de publication et mention de la délivrance du brevet: **15.09.1999**
(21) Numéro de dépôt: 95934687.5
(22) Date de dépôt: 05.10.1995
(51) Int. Cl.: A22C 11/10

(54) **MACHINE POUR METTRE UN BOYAU GARNI SOUS FORME DE BOYAU TORSADE, NOTAMMENT POUR LA MISE EN PORTIONS DE SAUCISSE**
MASCHINE ZUM FORMEN EINER GARNIERTEN HÜLLE IN EINER ABGEDREHTEN HÜLLE, INSBESONDERE ZUM PORTIONIEREN VON WÜRSTEN
MACHINE FOR TWISTING A FILLED CASING PARTICULARLY FOR CUTTING IT INTO SAUSAGE PORTIONS

(30) Priorité: 20.10.1994 FR 9412766
(43) Date de publication de la demande: 16.10.1996
(73) Titulaire: NIJAL (S.A.), F-56150 Baud (FR)
(72) Inventeur: LE PAIH, Jacques, F-56390 Plumeliau (FR)
(74) Mandataire: Ballot, Paul
(86) Numéro de dépôt international: FR9501292
(87) Numéro de publication internationale: WO9612410

(56) Documents cités:
- DE-A- 3 323 659
- DE-C- 179 769
- FR-A- 2 214 413
- US-A- 1 384 050
- US-A- 1 419 985
- US-A- 1 504 010
- US-A- 2 482 911
- US-A- 4 959 888

## Description

La présente invention concerne une machine pour mettre un boyau garni sous forme de chapelet torsadé, cette machine étant plus particulièrement destinée à la mise en portions de saucisse.

Dans la plupart des dispositifs de fabrication de saucisses séparées les unes des autres par une torsade opérée sur le boyau, c'est le dispositif de remplissage du boyau lui-même gui agit pour réaliser la torsade. A cet effet, le dispositif de remplissage comprend un tube ou mandrin de remplissage qui est mis en rotation après chaque opération d'injection d'une dose de chair dans le boyau, la saucisse venant d'être formée étant immobilisée en rotation. Il en est ainsi notamment des dispositifs décrits dans les brevets FR-A-2214413 et FR-A-2544171.

Ces systèmes présentent l'inconvénient d'être relativement lents par rapport à des machines effectuant uniquement le remplissage des boyaux. De plus, ils sont relativement complexes.

En vue de pallier ces inconvénients, l'invention a consisté A prévoir une machine de mise en chapelet torsadé qui soit séparée d'une machine de remplissage du boyau, et capable de supporter les cadences imposées par cette dernière ; et qui soit également simple dans sa structure et son fonctionnement. Le document US-A-4959888 divulgue une machine correspondant an préambule de la revendication 1.

Un autre but de l'invention a été de prévoir que cette machine puisse être nettoyée facilement.

A cet effet, une machine de mise sous forme d'un chapelet torsadé d'un boyau garni comprend en aval d'une entrée d'admission pour ledit boyau garni ou boudin un moyen de pincement du boudin destiné à définir des portions ; et est caractérisée en ce qu'elle y comprend en plus:
- des paires successives formées d'un premier et d'un second plateaux disposés parallèlement, à l'intérieur desquelles viennent s'engager selon une relation de contact serré lesdites portions définies par ledit moyen de pincement ;
les premier et second plateaux de chaque paire avançant dans la machine à partir dudit moyen de pincement en conservant leur relation de contact serré sur lesdites portions et en restant en coïncidence longitudinalement, tout en se déplaçant transversalement à la même vitesse mais dans des sens opposés de manière A faire tourner sur elle-même la portion qu'ils enserrent ;
tandis qu'entre premiers plateaux successifs, et entre seconds plateaux successifs, les sens de déplacement transversal sont alternés ;
de sorte que le boudin, entraîné par lesdites paires, progresse dans la machine sous forme de portions successives entre lesquelles se forme une torsade du fait de leur sens de rotation sur elle-même alterné.

Selon une autre caractéristique de l'invention, l'ensemble des premiers plateaux d'une part, et l'ensemble des seconds plateaux d'autre part, sont montés en deux mêmes arrangements de bande sans fin dans lesquels chaque plateau a une aptitude de déplacement transversal, les deux arrangements étant disposés de telle manière que deux de leurs brins se font face parallèlement, afin que se forment le long desdits brins lesdites paires de premier et second plateaux dans lesquelles transite le boudin.

Dans l'arrangement en bande sans fin supérieur, chaque plateau peut être prévu avec une légère liberté de déplacement afin que le long desdits brins qui se font face parallèlement, l'écartement du plateau supérieur avec son homologue inférieur puisse varier en fonction du calibre du boudin admis entre eux ; le plateau supérieur appuyant sur le boudin sous l'effet de son propre poids.

Dans une forme de réalisation préférée, chaque arrangement en bande sans fin comprend deux mêmes chaînes latérales engagées sur des moyens de renvoi amont et aval, chaînes entre lesquelles sont montées des glissières transversales portant les plateaux de façon coulissante.

Selon une autre caractéristique de l'invention, ledit moyen de pincement du boudin est formé par deux éléments tournants coopérant l'un avec l'autre, les deux éléments étant montés solidaires en rotation respectivement sur les arbres des moyens de renvoi amont desdits arrangements en bande sans fin.

Selon une autre caractéristique de l'invention, la machine comprend en outre un moyen de coupe pour opérer un sectionnement des torsades qui ont été réalisées entre les portions en vue d'individualiser ces dernières, ou bien des groupes de ces dernières.

Dans une forme de réalisation, de même que le moyen de pincement, ledit moyen de coupe se compose de deux éléments tournants coopérant l'un avec l'autre, les deux éléments étant montés solidaires en rotation respectivement sur les arbres des moyens de renvoi aval desdits arrangements en bande sans fin.

Dans une variante de réalisation, ledit moyen de pincement consiste en des éléments presseurs transversaux supérieurs chacun monté dans un intervalle entre plateaux supérieurs, et des éléments presseurs transversaux inférieurs chacun monté dans un intervalle entre plateaux inférieurs, chaque élément presseur supérieur coopérant avec un élément presseur inférieur pour pincer le boyau entrant, puis le relâcher ensuite pour que puisse s'opérer la torsade à l'endroit du pincement. Avantageusement, lesdits éléments presseurs ont une forme générale de rouleau.

Pour la découpe de portions, ou de groupes de portions, chaque paire d'éléments presseurs supérieur et inférieur peut être pourvue d'un moyen de coupe, par exemple de type ciseaux.

Dans les arrangements en bande sans fin (comportant des chaînes latérales), lesdits éléments presseurs sont montés sur les chaînes. Les chaînes passent dans des guides le long desdits brins qui se font face parallèlement, lesquels guides forment des cames afin que le long d'une première partie amont desdits brins qui se font face parallèlement, lesdits éléments presseurs supérieur et inférieur d'une même paire se rapprochent pour opérer le pincement du boudin, puis s'écartent ensuite afin que puisse s'opérer la torsade du boyau.

D'autres caractéristiques et avantages de l'invention apparaîtront plus clairement lors de la lecture de la description suivante, faite en relation avec les dessins annexés, dans lesquels :
la Fig. 1 est une vue schématique en perspective sur laquelle apparaissent les éléments essentiels d'une forme de réalisation de l'invention,
la Fig. 2 est une vue de côté schématique de la même machine,
la Fig. 3 est une vue similaire à la Fig. 2, qui illustre une position d'ouverture de la machine.
la Fig. 4 est une vue de côté partielle, illustrant une variante de réalisation de l'invention, et
les Figs. 5a, 5b sont des vues de principe y représentant l'association d'un moyen de coupe à un moyen de pincement et leur fonctionnement.

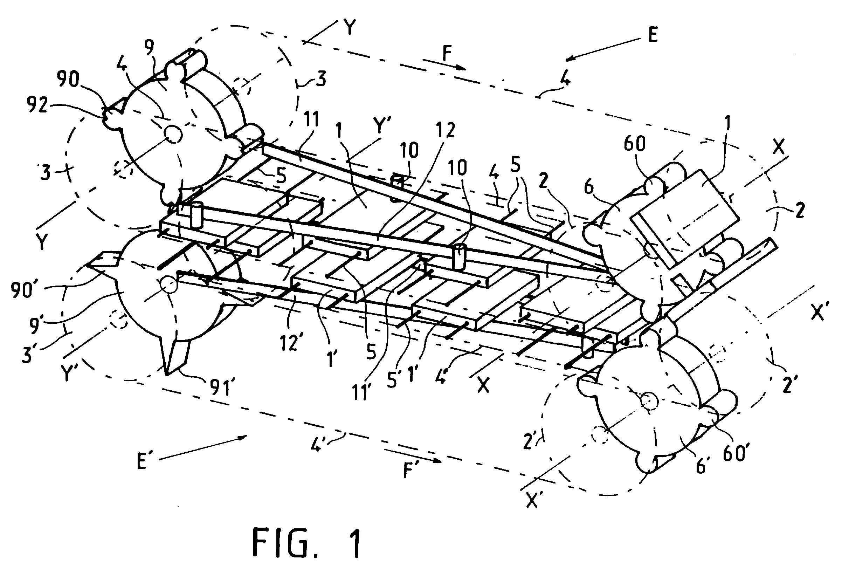

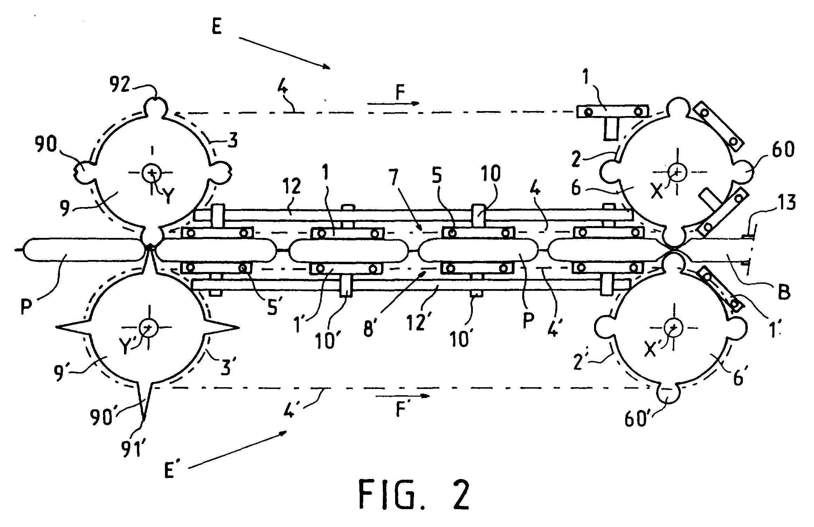

Considérant d'abord les Figs. 1 et 2, elles représentent une machine selon l'invention dont on voit qu'elle se compose essentiellement de deux ensembles E, E' de plateaux 1, 1' montés selon deux mêmes arrangements en bande sans fin superposés.

L'arrangement en bande sans fin supérieur ou ensemble E comprend deux roues de renvoi latérales amont 2 montées solidaires en rotation autour d'un axe X-X et deux roues de renvoi latérales aval 3 montées solidaires en rotation autour d'un axe Y-Y. Sur ces roues, sont montées deux chaînes latérales 4. Ces différents éléments ont été représentés de façon sommaire à la Fig. 1 pour ne pas nuire à la clarté du dessin.

Les chaînes latérales 4 portent des glissières transversales 5 sur lesquelles sont montés coulissants des plateaux 1, à raison de deux glissières par plateau. Toujours pour faciliter la compréhension des dessins, seuls quelques-uns de ces éléments ont été représentés.

Le long de la bande sans fin, les plateaux 1 se suivent selon un écartement régulier. En pratique, les plateaux 1 sont des plaques planes, dont la face côté extérieur est de préférence striée dans le sens longitudinal pour une raison qui sera explicitée dans la suite.

A son extrémité amont, l'ensemble E comprend en outre un élément 6 en forme générale de disque, lequel est monté solidaire en rotation avec les roues de renvoi 2 autour de l'axe X-X en position médiane entre celles-ci. A intervalles réguliers autour de sa périphérie, l'élément 6 qui a une certaine épaisseur comporte sur sa tranche des bossages ou oreilles 60 de même épaisseur en forme générale de cylindre axé transversalement. L'écartement des bossages 60 est tel qu'ils s'engagent dans les espaces libres entre plateaux successifs 1 lorsque ceux-ci passent autour des moyens de renvoi amont, en dépassant extérieurement par rapport aux plateaux. Ceci apparait clairement à la Fig. 2.

Un même ensemble E' que l'ensemble qui vient d'être décrit est disposé sous l'ensemble E, les deux ensembles E et E' étant exactement superposés. Etant donné leur caractère identique, l'ensemble inférieur ne sera pas redécrit et ses éléments communs avec l'ensemble supérieur portent les même repères, assortis du signe prime.

Ainsi, le brin inférieur 7 de l'ensemble E se trouve exactement en regard du brin supérieur 8' de l'ensemble E', leur écartement étant fonction du calibre ou diamètre des produits à traiter. En pratique, pour maintenir l'écartement des brins 7 et 8' constant sur toute la longueur, il est prévu de faire passer, le long de ces derniers, les chaînes latérales 4 et 4' dans des guides solidaires du bâti. De plus, une capacité de réglage en position de ces guides sera un moyen simple de modifier l'écartement des brins 7 et 8' pour permettre de traiter des produits de différents calibres.

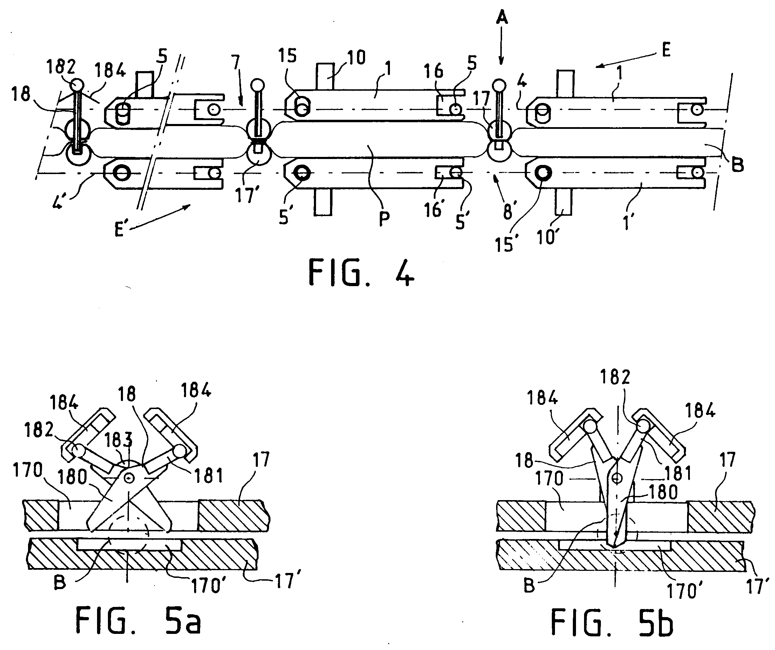

En variante ou en complément, et comme on le verra dans la suite à propos des Figs. 4, 5a et 5b, les plateaux supérieurs 1 peuvent avoir une liberté de mouvement limitée perpendiculairement à leur plan sur les glissières transversales 5.

Un mécanisme de synchronisation, non représenté, est agencé entre les deux ensembles E et E' ayant un même moyen d'entraînement, afin que d'une part, leurs vitesses de défilement soient égales et que, d'autre part, les plateaux 1 et 1' avancent par paire de plateau supérieur 1 et plateau inférieur 1' exactement superposés dans le sens longitudinal le long des brins 7 et 8'.

Quant aux deux éléments 6 et 6' qui, en fonctionnement, tournent en sens inverse, comme l'indiquent les flèches F et F', ils sont agencés de telle manière que leurs bossages 60 et 60' passent deux à deux en regard l'un de l'autre à la naissance des brins 7 et 8', en créant entre eux un rétrécissement important par rapport à l'écartement des plateaux supérieurs 1 et inférieurs 1' le long des brins 7 et 8'. La Fig. 2 montre qu'en fait, ils se rapprochent jusqu'à pratiquement se toucher.

Les ensembles E et E' comportent en outre des moyens pour déplacer transversalement leurs plateaux respectifs lors du défilement de ceux-ci le long des brins 7 et 8'. Tels que représentés sur les dessins, ces moyens comprennent d'une part un doigt 10 ou 10' faisant saillie orthogonalement sur la face interne de chaque plateau 1 ou 1', et d'autre part, des guides longitudinaux pour ces doigts.

On voit clairement à la Fig. 1 deux guides rectilignes longitudinaux 11 et 12, placés au-dessus du brin inférieur 7 de l'ensemble E. Ces deux guides sont disposés symétriquement de chaque côté du plan médian du brin 7. Ils partent d'une position centrale à l'extrémité amont, et divergent pour aboutir près des côtés du brin à l'extrémité aval.

Le doigt 10 de chaque plateau 1 est placé près d'un de ses côtés latéraux, Fig. 1. Entre plateaux successifs, les doigts sont en position alternée, d'un côté et de l'autre. Par conséquent, si un plateau 1 est dévié vers la droite par le guide 11 le long du brin 7, le plateau suivant va être dévié de même, mais dans le sens opposé, c'est-à-dire vers la gauche, par le guide 12. A noter que sur le brin de retour, des moyens de guidage non montrés ramènent tous les plateaux dans la position adéquate de départ le long du brin 7.

Dans l'ensemble E', des guides longitudinaux 11' et 12' correspondant aux guides 11 et 12 sont montés sous le brin 8'. Comme on le voit à la Fig. 1, les guides 11 et 11' et les guides 12 et 12' sont parallèles deux à deux et se superposent dans des plans verticaux. Comme dans l'ensemble E, les plateaux 1' vont être déviés transversalement dans un sens et dans l'autre de façon alternée lors de leur progression le long du brin 8'.

En revanche, dans les plateaux 1 et 1' de chaque paire qui vont progresser en coïncidence longitudinale le long des brins 7 et 8', les doigts 10 et 10' sont alternés d'un côté et de l'autre. Ainsi, lors de leur progression le long des brins 7 et 8', les plateaux 1 et 1' d'une même paire vont se déplacer transversalement à la même vitesse, mais en sens opposés.

On va maintenant décrire le fonctionnement de la machine en se référant à la Fig. 2. Un boudin B de produit à traiter a été introduit dans la machine par un conduit d'entrée 13 aligné avec le passage défini entre les brins 7 et 8', au niveau des éléments de pincement 6 et 6'.

A mesure de sa progression dans la machine, le boudin B subit de la part des éléments de pincement un écrasement à intervalles réguliers correspondant à la longueur d'une portion P. Etant donné l'agencement dans les ensembles E ou E' des plateaux et des bossages des éléments de pincement (à savoir que les plateaux s'inscrivent entre les bossages en passant autour des moyens de renvoi amont), l'écrasement du boudin se fait exactement dans l'intervalle entre plateaux successifs, et les portions P formées sont prises à l'intérieur de chaque paire de plateaux 1 et 1'.

Le long des brins 7 et 8', les portions P entraînées par le plateau inférieur et le plateau supérieur entre lesquels elles sont prises, vont rouler sur elles-mêmes sans varier de position transversale étant donné que lesdits plateaux se déplacent transversalement en opposition à la même vitesse. D'autre part, du fait de l'alternance des mouvements transversaux entre plateaux correspondants de paires successives, les portions successives tournent sur elles-mêmes dans des sens alternés, de sorte qu'il se forme entre elles une torsade du boyau le long des brins 7 et 8', dans l'intervalle séparant les paires de plateaux 1, 1'.

Les stries longitudinales mentionnées précédemment ménagées sur les faces externes des plateaux 1, 1' ont pour but d'éviter tout glissement relatif entre ces faces et l'enveloppe du boudin B, afin d'améliorer l'entraînement en rotation sur elles-mêmes des portions P le long des brins 7 et 8'. En complément, il peut être prévu également des stries transversales sur ces mêmes faces pour améliorer la tenue des portions P à l'intérieur des paires de plateaux 1, 1' dans le sens longitudinal.

Pour réaliser au mieux les torsades entre portions P, il convient de pouvoir commander le nombre de tours sur elles-mêmes qu'effectuent les portions P le long des brins 7 et 8' en fonction de leur diamètre ou de la qualité du boyau utilisé. Pour ce faire, on prévoit la possibilité de modifier l'amplitude de déplacement transversal des plateaux 1 et 1' le long des brins 7 et 8' par réglage de la divergence des guides 11, 11', 12 et 12'.

La machine représentée sur les dessins comprend également un moyen de coupe qui détache les portions P à l'extrémité aval des brins 7 et 8' en sectionnant la torsade qui a été formée entre elles.

Dans la forme de réalisation représentée, ce moyen de coupe comporte deux éléments agencés sur les axes Y-Y et Y'-Y' des moyens de renvoi aval des ensembles E et E', alignés longitudinalement avec les moyens de pincement 6, 6'. Comme eux, il s'agit d'éléments en forme générale de disque 9, 9', qui sont solidarisés en rotation avec les moyens de renvoi aval des ensembles E et E', respectivement.

L'un de ces éléments, soit ici l'élément supérieur 9, comporte à sa périphérie des bossages ou oreilles 90 de forme arrondie s'étendant radialement, régulièrement espacés entre eux et en même nombre que les bossages 60 de l'élément de pincement 6.

Au passage des plateaux 1 autour des moyens de renvoi aval de l'ensemble E, les plateaux 1 s'inscrivent entre les bossages 90, ceux-ci s'engrenant un peu à la manière de dents dans les intervalles entre lesdits plateaux, mais bien entendu, sans venir en contact avec ces derniers.

L'autre élément du moyen de coupe, ici l'élément inférieur 9', comporte également à sa périphérie des bossages 90' s'étendant radialement, en même nombre que les bossages 90 de l'élément 9, et comme eux régulièrement espacés.

De même que les plateaux 1 de l'ensemble E, ceux de l'ensemble E' s'inscrivent entre les bossages 90' lorsqu'ils passent autour des moyens de renvoi aval.

Les bossages 90' de l'élément inférieur 9', vus de côté, ont un profil triangulaire, de manière à présenter vers l'extérieur un bord extérieur transversal tranchant 91'. En variante, ce bord extérieur peut être équipé pour porter un élément de lame interchangeable.

De leur côté, les bossages 90 de l'élément supérieur 9 présentent dans leur zone la plus externe, pour coopérer avec le tranchant 91' des bossages 90', une partie en forme de gorge transversale 92 à profil en V.

Les éléments 9 et 9' sont montés de telle manière qu'à la terminaison de brins 7 et 8', le tranchant 91' (bord ou lame) d'un bossage 90' vienne pénétrer dans la gorge 92 d'un bossage 90 correspondant. Comme les bossages 90 et 90' se trouvent engagés dans les intervalles entre plateaux, cette pénétration du tranchant 91' dans la gorge 92 se fera obligatoirement au niveau d'une torsade entre portions qui se trouvera ainsi sectionnée. En fonctionnement, chaque portion P de produit, lorsqu'elle est libérée de la paire de plateaux dans laquelle elle a transité le long des brins 7 et 8', est donc détachée des suivantes pour sortir individualisée de la machine.

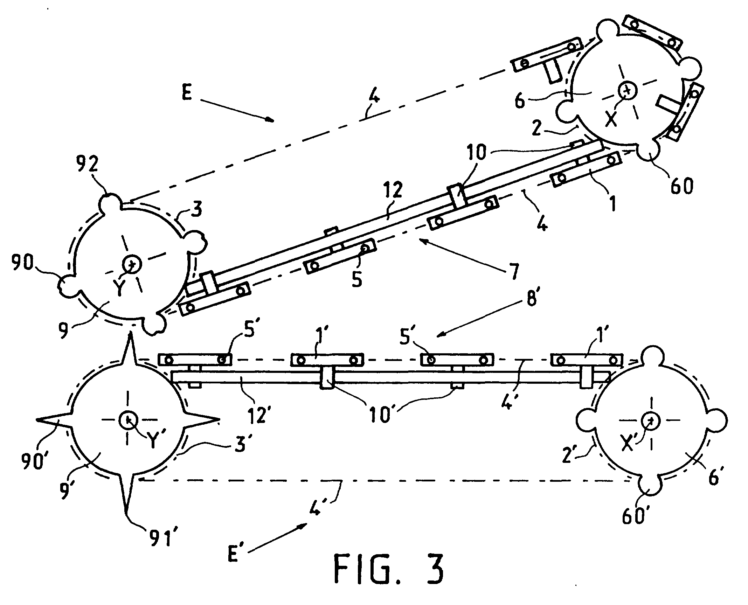

La Fig. 3 montre schématiquement la machine qui vient d'être décrite dans une position d'ouverture dont il ressort clairement qu'elle rend le nettoyage très simple du fait de l'accessibilité des brins 7 et 8' qui se trouvent nettement écartés l'un de l'autre.

Pour permettre cette ouverture, le bâti de la machine est composé de deux parties : une partie inférieure portant l'ensemble E' et une partie supérieure portant l'ensemble E articulée à ladite partie inférieure. A la Fig. 3, la partie de bâti supérieure est articulée à la partie de bâti inférieure autour de l'axe Y-Y des moyens de renvoi aval de l'ensemble supérieur E.

Les Figs. 4, 5a et 5b sont des vues partielles illustrant les particularités d'une autre machine selon l'invention qui ne se distingue de celle qui vient d'être décrite que par son moyen de pincement du boyau et son moyen de coupe, ainsi que par un agencement plus élaboré de ses plateaux supérieurs.

Hormis cela, elle comporte les mêmes arrangements en bande sans fin auxquels on a donc attribué les mêmes références E et E', ainsi qu'aux éléments communs : plateaux, glissières, chaînes latérales, brins se faisant face parallèlement. Bien entendu, il n'y a plus dans ces arrangements les éléments de pincement 6 et 6', ni les éléments de coupe 9 et 9', mais en revanche, elle peut toujours s'ouvrir comme montré à la Fig. 3.

On voit à la Fig. 4, qui représente uniquement et de façon partielle les brins 7 et 8' des arrangements E et E', que les plateaux supérieurs 1 sont montés chacun sur deux glissières 5, à l'avant par l'intermédiaire d'une lumière oblongue 15 axée perpendiculairement à leur plan, et à l'arrière par l'intermédiaire d'une échancrure 16 dans leur bord arrière, de même hauteur sensiblement que la lumière 15, laquelle a une largeur correspondant au diamètre des glissières 5. Chaque plateau 1 est donc parfaitement assujetti longitudinalement par rapport aux chaînes 4, de sorte qu'il restera toujours en correspondance étroite avec son homologue 1' de l'arrangement inférieur 1' avec lequel il forme une paire. En revanche, le long du brin 7, chaque plateau 1 aura la possibilité de se déplacer légèrement sur ses glissières 5, de façon à s'écarter de son homologue 1' en fonction du calibre du boudin B qui sera admis entre eux, lequel calibre, en pratique, peut fluctuer d'un boudin à l'autre et même sur la longueur d'un même boudin. La force pressante agissant sur le boudin B admis entre les plateaux 1 et 1' pour le faire tourner sur lui-même résultera donc du poids du plateau 1.

On notera que le fait de prévoir le passage de la glissière arrière 5 dans une échancrure 16 au lieu d'une lumière oblongue procure deux avantages : tout d'abord, le plateau n'est pas contraint à ne se déplacer que parallèlement à lui-même, mais il peut s'incliner légèrement et, d'autre part, il est plus rapidement démontable puisqu'il suffit alors de déconnecter de la chaîne 4 la seule glissière avant. C'est ce deuxième avantage qui justifie que l'on prévoit le même montage par des échancrures arrières 16' sur les glissières 5' des plateaux inférieurs 1'. Ces échancrures 16' et les trous de passage 15' à l'avant ont respectivement une hauteur et un diamètre correspondant à celui des glissières 5'.

On remarquera d'autre part qu'au moins les arêtes avant des faces de contact avec le boudin des plateaux 1 et 1' sont rabattues, soit chanfreinées comme représenté, ou bien arrondies pour ne pas blesser l'enveloppe ou boyau du boudin B.

S'agissant du moyen de pincement du boyau B, il se présente comme suit. En position centrale dans les intervalles entre plateaux successifs 1 de l'ensemble E, et de même en position centrale dans les intervalles entre plateaux successifs 1' de l'ensemble E', sont prévus des éléments presseurs transversaux, respectivement 17 et 17' qui, en pratique, ont une forme générale de rouleaux. Ils sont montés par l'intermédiaire de fixations de type patte ou équerre, non montrées, sur les chaînes 4 et 4'.

Chaque élément ou rouleau 17 forme une paire avec un élément 17', les deux venant en regard l'un de l'autre le long des brins 7 et 8'. Dans la partie amont de ces derniers, soit la partie de droite de la Fig. 4, les deux rouleaux 17 et 17' d'une même paire viennent en appui l'un contre l'autre en exerçant ainsi un écrasement progressif puis pincement du boudin B. A cet effet, les chaînes 4 et 4' sont engagées dans des guides, non représentés, qui forment des cames. Au-delà de la position A de pincement, les rouleaux 17 et 17' s'écartent légèrement en relâchant donc la partie pincée du boudin B qui pourra donc dès lors être torsadée par déplacement transversal des plateaux 1 et 1' comme précédemment décrit.

Avantageusement, les rouleaux seront recouverts d'une garniture présentant une certaine souplesse élastique. D'autre part, on peut remarquer sur le dessin que leurs surfaces de pincement se présentent sous la forme de méplats. Et bien que ceci ne soit pas représenté, il pourra également être prévu dans ces surfaces pressantes des encoches en forme de V dans la zone du passage du boudin B, afin que le boudin, au lieu d'être aplati à l'endroit du pincement, subisse plutôt un étranglement sur tout son pourtour, moins agressif pour le boyau.

A chaque paire de rouleaux 17, 17', est associé un moyen de coupe de torsade qui entre en action dans la partie terminale aval des brins 7 et 8'. Comme le montrent mieux les Figs. 5a et 5b, ce moyen de coupe consiste en des ciseaux 18 rendus solidaires de l'un des rouleaux, ici le rouleau supérieur 17 par une monture 183. Les lames 180 des ciseaux 18 traversent le rouleau 17 par une ouverture allongée 170, et à laquelle correspond un creux 170' dans le rouleau 17'. Comme le montre la Fig. 5a, en position d'ouverture des ciseaux 18, ses lames sont suffisamment écartées pour ne pas entraver le passage du boudin B.

Les ciseaux 18 sont commandés en fermeture dans la partie terminale des brins 7 et 8', par des rampes de guidages 184 sur lesquelles s'engagent les extrémités de leurs branches 181 qui sont à cet effet pourvues de patins de glissement, avantageusement de forme sphérique. En se refermant, Fig. 5b, les extrémités des lames 180 pénètrent dans le creux 170' du rouleau 17, et en se croisant, elles opèrent le sectionnement de la torsade qui a été formée, sensiblement en son milieu. A noter qu'il est possible de prévoir les ciseaux 18 avec des branches 181 repliables, ce qui permet de façon très simple de neutraliser certains d'entre eux si, au lieu de portions P individuelles, l'utilisateur désire former des groupes de plusieurs restant unies par les torsades.

Dans une autre variante de réalisation, les moyens de pincement consistent en des pinces en forme de ciseaux prévues entre les plateaux d'un ensemble E ou E'. Ces pinces ont des mâchoires en V qui se chevauchent lors de la fermeture pour former un espace fermé dans lequel est pris le boudin, cet espace fermé se resserrant sur lui-même le long d'un tronçon d'extrémité amont des brins 7 et 8' sur lequel les plateaux 1 et 1' ne se déplacent pas transversalement. Les moyens de coupe consistent en une lame portée par un bras monté pivotant sur l'articulation de chaque pince, la lame agissant le long d'un tronçon d'extrémité aval des brins 7 et 8'. Les bras de chaque pince et du moyen de coupe associé sont commandés par des guides respectifs formant came.

Lors d'essais, un prototype de machine selon l'invention s'est montré apte à tenir des cadences très satisfaisantes en toute fiabilité. On notera qu'il serait possible de multiplier le rendement en prévoyant le passage de deux boudins ou plus en parallèle entre les brins 7 et 8'.

## Revendications

1. Machine pour mettre un boyau garni sous forme de boyau torsadé, notamment pour la mise en portions de saucisse, comprenant en aval d'une entrée d'admission (13) pour ledit boyau garni (B), un moyen de pincement du boudin (B) destiné à définir des portions (P) ; et caractérisée en ce qu'elle y comprend en plus
- des paires successives formées d'un premier et d'un second plateaux (1, 1') disposés parallèlement, à l'intérieur desquelles viennent s'engager selon une relation de contact serré lesdites portions (P) définies par ledit moyen de pincement ;
les premier et second plateaux (1, 1') de chaque paire avançant dans la machine à partir dudit moyen de pincement en conservant leur relation de contact serré sur lesdites portions, et en restant en coïncidence longitudinalement, tout en se déplaçant transversalement à la même vitesse mais dans des sens opposés de manière à faire tourner sur elle-même la portion (P) qu'ils enserrent ;
tandis qu'entre premiers plateaux (1) successifs, et entre seconds plateaux (1') successifs, les sens de déplacement transversal sont alternés ;
de sorte que le boudin (B), entraîné par lesdites paires (1, 1'), progresse dans la machine sous forme de portions successives (P) entre lesquelles se forme une torsade du fait de leur sens de rotation sur elle-même alterné.

2. Machine selon la revendication 1, caractérisée en ce qu'elle comprend en outre un moyen de coupe pour opérer un sectionnement d'au moins certaines des torsades qui ont été réalisées entre les portions (P), en vue d'individualiser ces dernières, ou bien des groupes de ces dernières.

3. Machine selon la revendication 1 ou 2, caractérisée en ce que l'ensemble des premiers plateaux (1) d'une part, et l'ensemble des seconds plateaux (1') d'autre part, sont montés en deux mêmes arrangements de bande sans fin (E, E') dans lesquels chaque plateau (1 ou 1') a une aptitude de déplacement transversal, les deux arrangements (E, E') étant disposés de telle manière que deux de leurs brins (7, 8') se font face parallèlement, afin que se forment le long des brins (7, 8') lesdites paires de premier et second plateaux (1, 1') dans lesquelles transite le boudin (B).

4. Machine selon la revendication 3, caractérisée en ce que dans l'arrangement en bande sans fin supérieur (E), chaque plateau (1) est prévu avec une légère liberté de déplacement afin que le long desdits brins (7, 8') qui se font face parallèlement, l'écartement du plateau supérieur (1) avec son homologue inférieur (1') puisse varier en fonction du calibre du boudin (B) admis entre eux, le plateau supérieur (1) appuyant sur le boudin (B) sous l'effet de son propre poids.

5. Machine selon la revendication 3 ou 4, caractérisée en ce que chaque arrangement en bande sans fin (E ou E') comprend deux mêmes chaînes latérales (4 ou 4') engagées sur des moyens de renvoi amont et aval (2, 3 ou 2', 3'), chaînes (4 ou 4') entre lesquelles sont montées des glissières transversales (5 ou 5') portant les plateaux (1 ou 1') de façon coulissante.

6. Machine selon la revendication 5, caractérisée en ce que le long des brins (7, 8'), les chaînes (4, 4') passent dans des guides solidaires du bâti réglables en position pour permettre de modifier l'écartement des brins (7, 8') en fonction du calibre du boudin (a) à traiter.

7. Machine selon l'une des revendications 3 à 6, caractérisée en ce que des moyens de déplacement transversal des plateaux (1, 1') le long desdits brins (7, 8') comprennent d'une part, un doigt (10, 10') faisant saillie orthogonalement sur la face interne des plateaux (1, 1') et d'autre part, des guides longitudinaux (11, 12, 11', 12') pour ces doigts.

8. Machine selon l'une des revendications 3 à 7, caractérisée en ce que ledit moyen de pincement du boudin (B) se compose de deux éléments tournants (6, 6') coopérant l'un avec l'autre, les deux éléments tournants (6, 6') étant montés solidaires en rotation respectivement sur les arbres des moyens de renvoi amont desdits arrangements en bande sans fin (E, E').

9. Machine selon l'une des revendications 3 à 8, caractérisée en ce que ledit moyen de coupe se compose de deux éléments tournants (9, 9') coopérant l'un avec l'autre, les deux éléments (9, 9') étant montés solidaires en rotation respectivement sur les arbres des moyens de renvoi aval desdits arrangements en bande sans fin (E, E').

10. Machine selon l'une des revendications 1 à 7, caractérisé en ce que ledit moyen de pincement consiste en des éléments presseurs transversaux supérieurs (17) chacun monté dans un intervalle entre plateaux supérieurs (1), et des éléments presseurs transversaux inférieurs (17') chacun monté dans un intervalle entre plateaux inférieurs (1'), chaque élément presseur supérieur (17) coopérant avec un élément presseur inférieur (17') pour pincer le boyau entrant (B), puis le relâcher ensuite pour que puisse s'opérer la torsade à l'endroit du pincement.

11. Machine selon la revendication 10 en tant que dépendante de la revendication 5, caractérisée en ce que lesdits éléments presseurs transversaux (17, 17') sont montés respectivement sur les chaînes latérales (4, 4') qui passent le long desdits brins (7, 8') dans des guides, lesquels guides forment des cames afin que le long d'une première partie amont des brins (7, 8'), lesdits éléments presseurs supérieur (17) et inférieur (17') d'une même paire se rapprochent pour opérer le pincement du boudin (B), puis s'écartent ensuite afin que puisse s'opérer la torsade du boyau.

12. Machine selon la revendication 10 ou 11, caractérisée en ce que chaque paire d'éléments presseurs supérieur et inférieur (17, 17') est pourvue d'un moyen de coupe de torsade.

13. Machine selon l'une des revendications 3 à 12, caractérisée en ce que le bâti comporte deux parties portant respectivement les ensembles (E, E'), lesquelles deux parties sont articulées l'une à l'autre pour permettre d'écouler nettement les brins (7, 8') dans une position d'ouverture.

14. Machine selon l'une des revendications 1 à 13, caractérisée en ce que la face externe des plateaux (1, 1') est striée longitudinalement.

## Claims

1. A machine for forming a stuffed tubular casing into a twisted casing, in particular for forming sausage into portions, having, downstream of an admission inlet (13) for said stuffed casing (B), a means for pinching the stuffed sausage length (B) designed to define portions (P); and characterized in that it also has
successive pairs comprising a first and a second plate (1, 1') arranged parallel, within which said portions (P) defined by said pinching means are fed so as to be engaged in a tight contact;
the first and second plates (1, 1') of each pair moving forward in the machine from said pinching means, remaining in tight contact on said portions and remaining alongside each other longitudinally whilst moving transversely at the same speed but in opposite directions so as to turn the portion (P) they are holding on itself;
the direction of transverse displacement being alternated between first successive plates (1) and between second successive plates (1');
so that the sausage (B), driven by said pairs (1, 1') advances in the machine in the form of successive portions (P) between which a twist is formed due to the alternating direction in which they are rotated on themselves.

2. A machine as claimed in claim 1, characterized in that it also has a cutting means in order to divide at least some of the twists formed between the portions (P) in order to separate the latter into individual portions or groups thereof.

3. A machine as claimed in claim 1 or 2, characterized in that the set of first plates (1) on the one hand and the set of second plates (1') on the other are mounted in two same endless belt arrangements (E, E') in which each plate (1 or 1') is able to be transversely displaced, the two arrangements (E, E') being so disposed that their two lengths (7, 8') are parallel facing one another thereby forming said pairs of first and second plates (1, 1') in which the sausage is fed (B) along the lengths (7, 8').

4. A machine as claimed in claim 3, characterized in that in the top endless belt arrangement (E), each plate (1) has a slight freedom of movement so that the distance of the top plate (1) from its bottom counterpart (1') can be varied along said lengths (7, 8') facing one another in parallel depending on the size of the sausage (B) fed between them, the top plate (1) being supported on the sausage (B) under the effect of its own weight.

5. A machine as claimed in claim 3 or 4, characterized in that each endless belt arrangement (E or E') comprises two same lateral chains (4 or 4') engaged on upstream and downstream reversing means (2, 3 or 2', 3'), transverse slides (5, 5') bearing the plates (1 or 1') being slidably mounted between chains (4 or 4').

6. A machine as claimed in claim 5, characterized in that along the lengths (7, 8'), the chains (4, 4') pass between guides joined to the frame, the position of which can be adjusted to modify the spacing between the lengths (7, 8') depending on the size of the sausage (B) to be processed.

7. A machine as claimed in one of claims 3 to 6, characterized in that the means for transversely displacing the plates (1, 1') along said lengths (7, 8') comprise on the one hand a finger (10, 10') projecting orthogonally out from the inner face of the plates (1, 1') and on the other longitudinal guides (11, 12, 11', 12') for these fingers.

8. A machine as claimed in one of claims 3 to 7, characterized in that said means for pinching the sausage (B) consists of two rotating elements (6, 6') co-operating with one another, the two rotating elements (6, 6') being mounted so as to be joined in rotation on the shafts of the upstream reversing means of said endless belt arrangements (E, E').

9. A machine as claimed in one of claims 3 to 8, characterized in that said cutting means consists of two rotating elements (9, 9') co-operating with one another, the two elements (9, 9') being mounted so as to be joined in rotation respectively on the shafts of the downstream reversing means of said endless belt arrangements (E, E').

10. A machine as claimed in one of claims 1 to 7, characterized in that said pinching means consists of top transverse pressing elements (17), each mounted in a space between top plates (1) and bottom transverse pressing elements (17') each mounted in a space between bottom plates (1'), each top pressing element (17) co-operating with a bottom pressing element (17') in order to pinch the incoming casing (B) and then release it so that the twist can be made at the point of the pinch.

11. A machine as claimed in claim 10 as dependent on claim 5, characterized in that said transverse pressing elements (17, 17') are mounted respectively on the lateral chains (4, 4') moving along said lengths (7, 8') in guides, these guides forming cams so that said top (17) and bottom (17') pressing elements of a same pair along a first upstream part of the lengths (7, 8') are moved towards one another in order to pinch the sausage (B) and then move apart to allow the casing to be twisted.

12. A machine as claimed in claim 10 or 11, characterized in that each pair of top and bottom pressing elements (17, 17') is provided with a twisting cutting means.

13. A machine as claimed in one of claims 3 to 12, characterized in that said frame has two parts respectively bearing the units (E, E'), the two parts being articulated with respect to one another to allow the lengths (7, 8') to run readily into an open position.

14. A machine as claimed in one of claims 1 to 13, characterized in that the external face of the plates (1, 1') has longitudinal grooves.

## Patentansprüche

1. Maschine, um einem gefüllten Darm die Form eines schnurförmig verdrehten Darms zu verleihen, insbesondere zur Portionierung von Würsten, die stromabwärts eines Zufuhreingangs (13) für den gefüllten Darm (B) ein Mittel zum Quetschen des Schlauchs (B) aufweist, das zum Abgrenzen von Portionen (P) dient, dadurch gekennzeichnet, daß
sie außerdem aufeinanderfolgende Plattenpaare aufweist, die aus einer ersten und einer zweiten Platte (1, 1') bestehen, die parallel zueinander angeordnet sind und zwischen die sich die durch das Quetschmittel abgegrenzten Portionen (P) in engem Kontakt mit ihnen einfügen,
wobei die erste und die zweite Platte (1, 1') jedes Paars sich in der Maschine ausgehend von diesem Quetschmittel vorwärts bewegen, indem sie ihren engen Kontakt mit den Portionen beibehalten, und indem sie in Längsrichtung deckungsgleich bleiben, sich aber in Querrichtung mit gleicher Geschwindigkeit, jedoch in entgegengesetzter Richtung bewegen, um die von ihnen eingeklemmte Portion (P) um sich selbst zu drehen,
während zwischen ersten aufeinanderfolgenden Platten (1) und zweiten aufeinanderfolgenden Platten (1') die Richtungen der Querverschiebung alternierend sind,
so daß der Schlauch (B), der von diesen Paaren (1, 1') mitgenommen wird, sich in der Maschine in Form von aufeinanderfolgenden Portionen (P) vorwärts bewegt, zwischen denen aufgrund ihrer abwechselnden Drehrichtung um sich selbst eine schnurförmige Verdrehung entsteht.

2. Maschine nach Anspruch 1, dadurch gekennzeichnet, daß sie weiter ein Schneidemittel aufweist, um eine Abtrennung mindestens einiger der zwischen den Portionen (P) hergestellten, schnurförmigen Verdrehungen durchzuführen, um diese Portionen oder Gruppen dieser Portionen zu vereinzeln.

3. Maschine nach Anspruch 1 oder 2, dadurch gekennzeichnet, daß die Gesamtheit der ersten Platten (1) einerseits und die Gesamtheit der zweiten Platten (1') andererseits in zwei gleichen Endlosband-Anordnungen (E, E') montiert sind, bei denen jede Platte (1 oder 1') in Querrichtung verschoben werden kann, wobei die beiden Anordnungen (E, E') so angeordnet sind, daß zwei ihrer Trumme (7, 8') sich parallel gegenüberliegen, damit entlang dieser Trumme (7, 8') die Paare von ersten und zweiten Platten (1, 1') gebildet werden, in denen der Schlauch (B) transportiert wird.

4. Maschine nach Anspruch 4, dadurch gekennzeichnet, daß in der oberen Endlosband-Anordnung (E) jede Platte (1) eine geringfügige Verschiebefreiheit aufweist, damit entlang der einander parallel gegenüberliegenden Trumme (7, 8') der Abstand der oberen Platte (1) zur ihr entsprechenden unteren Platte (1') in Abhängigkeit vom Durchmesser des zwischen sie eingefügten Schlauchs (B) variieren kann, wobei die obere Platte (1) unter der Wirkung ihres eigenen Gewichts auf den Schlauch (B) drückt.

5. Maschine nach Anspruch 3 oder 4, dadurch gekennzeichnet, daß jede Endlosband-Anordnung (E oder E') zwei gleiche Seitenketten (4 oder 4') besitzt, die auf stromaufwärts und stromabwärts liegende Umlenkmittel (2, 3 oder 2', 3') aufgelegt sind, Ketten (4 oder 4'), zwischen die querliegende Laufschienen (5 oder 5') montiert sind, welche die Platten (1 oder 1') gleitend tragen.

6. Maschine nach Anspruch 5, dadurch gekennzeichnet, daß entlang der Trumme (7, 8') die Ketten (4, 4') in fest mit dem Gestell verbundenen, in der Position verstellbaren Führungen verlaufen, um die Veränderung des Abstands der Trumme (7, 8') in Abhängigkeit vom Durchmesser des zu verarbeitenden Schlauchs (B) zu erlauben.

7. Maschine nach einem der Ansprüche 3 bis 6, dadurch gekennzeichnet, daß Mittel zur Querverschiebung der Platten (1, 1') entlang der Trumme (7, 8') einerseits einen Finger (10, 10'), der senkrecht auf der Innenseite der Platten (1, 1') vorsteht, und andererseits Längsführungen (11, 12, 11', 12') für diese Finger aufweisen.

8. Maschine nach einem der Ansprüche 3 bis 7, dadurch gekennzeichnet, daß das Mittel zum Quetschen des Schlauchs (B) von zwei zusammenwirkenden, drehenden Elementen (6, 6') gebildet wird, die in drehfester Verbindung je auf die Wellen der stromaufwärts liegenden Umlenkmittel der Endlosband-Anordnungen (E, E') montiert sind.

9. Maschine nach einem der Ansprüche 3 bis 8, dadurch gekennzeichnet, daß das Schneidemittel aus zwei zusammenwirkenden, drehenden Elementen (9, 9') besteht, die je in drehfester Verbindung auf die Wellen der stromabwärts liegenden Umlenkmittel der Endlosband-Anordnungen (E, E') montiert sind.

10. Maschine nach einem der Ansprüche 1 bis 7, dadurch gekennzeichnet, daß das Quetschmittel aus oberen, querliegenden Preßelementen (17), die je in einem Zwischenraum zwischen oberen Platten (1) montiert sind, und unteren, querliegenden Preßelementen (17') besteht, die je in einem Zwischenraum zwischen unteren Platten (1') montiert sind, wobei jedes obere Preßelement (17) mit einem unteren Preßelement (17') zusammenwirkt, um den ankommenden Schlauch (B) zu quetschen und ihn dann loszulassen, damit die schnurförmige Verdrehung an der Stelle der Quetschung durchgeführt werden kann.

11. Maschine nach Anspruch 10 als von Anspruch 5 abhängigem Anspruch, dadurch gekennzeichnet, daß die querliegenden Preßelemente (17, 17') je auf die Seitenketten (4, 4') montiert sind, die entlang der Trumme (7, 8') in Führungen verlaufen, wobei die Führungen Nocken bilden, damit entlang eines ersten, stromaufwärtsliegenden Bereichs der Trumme (7, 8') das obere (17) und das untere Preßelement (17') eines Paares sich einander annähern, um den Schlauch (B) zu quetschen, und sich dann voneinander entfernen, damit die schnurförmige Verdrehung des Darms durchgeführt werden kann.

12. Maschine nach Anspruch 10 oder 11, dadurch gekennzeichnet, daß jedes Paar von oberen und unteren Preßelementen (17, 17') mit einem Mittel zum Abschneiden der schnurförmigen Verdrehung versehen ist.

13. Maschine nach einem der Ansprüche 3 bis 12, dadurch gekennzeichnet, daß das Gestell zwei Teile aufweist, die je die Einheiten (E, E') tragen, wobei die beiden Teile aneinander angelenkt sind, um es zu ermöglichen, die Trumme (7, 8') in einer Öffnungssstellung fließend zu reinigen.

14. Maschine nach einem der Ansprüche 1 bis 13, dadurch gekennzeichnet, daß die Außenseite der Platten (1, 1') in Längsrichtung gerillt ist.
